# EUROPEAN PATENT SPECIFICATION

(11) **EP 1 294 581 B1**
(45) Date of publication and mention of the grant of the patent: **25.04.2007**
(21) Application number: 01951560.0
(22) Date of filing: 05.06.2001
(51) Int. Cl.: B60C 1/00, C08C 19/40

(54) **PROCESS FOR PRODUCING TYRES, TYRES THUS OBTAINED AND ELASTOMERIC COMPOSITIONS USED THEREIN**
VERFAHREN ZUM HERSTELLEN VON REIFEN, DAMIT ERHALTENE REIFEN UND DARIN BENUTZTE ELASTOMERZUSAMMENSETZUNGEN
PROCEDE DE FABRICATION DE PNEUMATIQUES, PNEUMATIQUES RESULTANTS ET COMPOSITIONS ELASTOMERES UTILISEES A CETTE FIN

(30) Priority: 14.06.2000 EP 00112572; 20.06.2000 US 212688 P
(43) Date of publication of application: 26.03.2003
(73) Proprietor: Pirelli Tyre S.p.A., 20126 Milano (IT)
(72) Inventor: SERRA, Antonio, I-16138 Genova (IT); NAHMIAS NANNI, Marco, I-20121 Milano (IT)
(74) Representative: Giannesi, Pier Giovanni
(86) International application number: PCT/EP2001/006358
(87) International publication number: WO 2001/096127

(56) References cited:
- EP-A- 0 094 899
- IT-B- 1 245 551
- S VARUGHESE ET AL: "Chemical Interaction between epoxidized natural rubber and silica: studies on cure characteristics and low temperature dynamic mechanical properties" JOURNAL OF APPLIED POLYMER SCIENCE,JOHN WILEY AND SONS INC. NEW YORK,US, vol. 44, 1992, pages 1847-1852, XP002103228 ISSN: 0021-8995

## Description

The present invention relates to a process for producing tyres for the wheels of vehicles, to the tyres thus obtained and to the crosslinkable elastomeric compositions used therein. More particularly, the present invention relates to a process for producing tyres for the wheels of vehicles, which can be carried out substantially in the absence of conventional crosslinking agents, to the tyres thus obtained and to the crosslinkable compositions used therein.

Processes for vulcanizing diene elastomers with sulphur are widely used in the rubber industry for the production of a wide range of products, and in particular tyres for the wheels of vehicles. Although these processes give high-quality vulcanized products, they are considerably complicated to carry out, mainly due to the fact that, in order to obtain optimum vulcanization within industrially acceptable times, it is necessary to use a complex vulcanizing system which includes, besides sulphur or sulphur-donating compounds, one or more activators (for example stearic acid, zinc oxide and the like) and one or more accelerators (for example thiazoles, dithiocarbamates, thiurams, guanidines, sulphenamides and the like). The presence of these products can, in some cases, entail considerable problems in terms of the harmfulness/toxicity both during production and during use, in particular when the vulcanized products are intended for medical/health-care or food use. In addition, it is known that the use of sulphur or sulphur-donating compounds leads, during the vulcanization stage which is generally carried out at temperatures above 150°C, to the development of volatile sulphurized compounds.

Consequently, in recent years, research efforts have been directed along two different lines, the first being to improve the known vulcanization processes in order to make them more efficient and cleaner, the second aimed at developing alternative crosslinking techniques. Although appreciable progress has been made, it is not possible to state at the present time that alternative techniques to crosslinking with sulphur exist which would give similar results and would simultaneously afford an effective simplification in terms of production. For example, crosslinking processes by means of peroxide compounds require special precautions on account of the instability of these compounds, in addition to requiring the use of activators. Crosslinking by radiation involves the use of complex equipment, as well as the incor-poration of all the precautions required when high-energy and high-power radiation is used.

The prior art discloses so-called "self-vulcanizing" elastomeric compositions, i.e. compositions which do not require the use of crosslinking agents such as sulphur or sulphur compounds.

For example, US patent 2 724 707 describes elastomeric compositions consisting of a diene polymer containing free carboxylic groups, in particular a carboxylated nitrile rubber (XNBR) obtained by partial i hydrolysis of a butadiene/acrylonitrile copolymer, in which is dispersed a multivalent metal oxide (for example zinc oxide). On heating, these compositions crosslink according to a mechanism of ionic type.

The article by S. K. Chakraborty and S.K. De, published in the Journal *of Applied Polymer Science,* Vol. 27, pp. 4561-4576 (1982), discloses a study on the crosslinking of XNBR with a high degree of carboxylation by reaction with an epoxy resin (for example bisphenol A diglycidyl ether) in the presence of reinforcing fillers such as carbon black, silica and clay. The crosslinking is carried out by heating the mixture to 150°-180°C. As is known, epoxy resins are low molecular weight products in which the epoxide (or oxirane) groups are "external", i.e. they are located in the terminal position on the main hydrocarbon chain, the oxygen atom forming the oxirane ring being linked to the last and penultimate carbon atoms of the chain.

A study of the crosslinking of a composition based on epoxidized natural rubber (ENR) and on XNBR is reported in the article by R. Alex, P. P. De, N. M. Mathew and S. K. De, published in *Plastics and Rubber Processing and Applications,* Vol. 14, No. 4, 1990. In particular, that article discloses the crosslinking of compositions consisting of ENR and XNBR in unmodified form or containing silica or carbon black as reinforcing filler. According to the authors' disclosure, in the mixtures of ENR and XNBR, the crosslinking reaction comprises the formation of ester bonds between epoxide groups and carboxylic groups. The rheometric curves are said to show the absence of reversion, the stability of the crosslinked structure and the high speed of crosslinking.

US patent 5 173 557 discloses self-vulcanizing compositions comprising an elastomeric polymer functionalized with isocyanate groups and a compound containing at least two active hydrogens of Zerewitinoff type, or self-vulcanizing compositions comprising an elastomeric polymer containing active hydrogens of Zerewitinoff type and a compound containing at least two isocyanate groups. Alternatively, an elastomeric polymer containing either isocyanate groups or active hydrogens of Zerewitinoff type can be used, without using an additional crosslinking agent. The active hydrogens can be present, for example, on hydroxide, amine, carboxylic or thiol groups. In order to avoid undesired pre-crosslinking of the elastomer, the isocyanate groups are blocked beforehand with suitable functional groups, which are removed by heating before the crosslinking reaction between the free isocyanate groups and the active hydrogens, optionally with the aid of a catalyst.

Italian patent IT-1 245 551 describes self-vulcanizing compositions containing an epoxidized elastomer and a vulcanizing agent of formula R1-R-R2, in which R is an arylene, alkylene or alkenylene group, while R1 and R2 are carboxylic, amine, sulphonic or chlorosulphonic groups. Dicarboxylic or polycarboxylic acids, or mixtures thereof, can be used as vulcanizing agents. Self-vulcanizing compositions containing an epoxidized elastomer and a second elastomer in which the repeating units of the polymer chain contain at least one carboxylic group are also described. For example, self-vulcanizing compositions are obtained by mixing an epoxidized elastomer (for example the products ENR 25 or ENR 50 which are available under the brand name Epoxiprene® from the Malaysian Rubber Producers Research Association) with terephthalic acid, sebacic acid or maleic acid. The crosslinking reaction takes place by heating the epoxide groups and the carboxylic groups, with formation of ester bonds.

On the basis of the Applicant's experience, the self-vulcanizing compositions proposed hitherto-in the prior art do not provide a valid alternative to conventional compositions vulcanized with sulphur or derivatives thereof. The reason for this is that the performance qualities of the crosslinked products are generally unsatisfactory, in particular for applications such as tyre compounds, in which high elastic and tensile performance qualities are required. This is the case, for example, for the self-crosslinking compositions described in patent IT-1 245 551 mentioned above, involving the use of vulcanizing agents containing carboxylic groups, in which the elongation at break of the elastomeric mixture thus obtained is, however, poor (generally it does not exceed a value of 200%) and is thus unacceptable for the majority of tyre applications such as, for example, the production of a tread band. In addition, dicarboxylic acids are usually in the form of crystalline solids with melting points of greater than 150°C. This leads, during the mixing phase, to poor dispersion of the crosslinking agent in the polymer.

The Applicant has now found, surprisingly, that crosslinked products, and in particular tyres for vehicle wheels, which have the desired combination of properties, can be produced, in the substantial absence of additional crosslinking agents, by using self-crosslinking compositions comprising a mixture of an elastomeric polymer containing epoxide groups and an oligomer of a fatty acid.

On heating, these compositions reach a high degree of crosslinking without the addition of conventional crosslinking agents, and with crosslinking times contained within limits that are acceptable for industrial use. The resulting crosslinked product combines excellent mechanical and elastic performance qualities, in particular stress at break, elongation at break, modulus and hardness, which are such that they make the self-crosslinking compositions mentioned above particularly suitable as elastomeric materials to be used for the production of tyres, in particular tread bands.

In addition, the use of fatty acid oligomers, which are usually in the form of liquids, makes it possible to obtain crosslinkable compositions having excellent processability and a high capacity to incorporate reinforcing fillers, even in the absence of compatibilizing additives, since these carboxylated products act not only as crosslinking agents but also as processing coadjuvants and are capable of interacting with reinforcing fillers containing active hydroxyl groups (for example silica) thus bringing about their compatibilization with the polymer matrix.

According to a first aspect, the present invention thus relates to a process for producing tyres for vehicle wheels, the said process comprising the following steps:
manufacturing a green tyre comprising at least one crosslinkable elastomeric material;
subjecting the green tyre to moulding in a mould cavity defined in a vulcanization mould;
crosslinking the elastomeric material by heating the tyre to a predetermined temperature and for a predetermined time;
characterized in that the crosslinkable elastomeric material comprises: (a) an elastomeric polymer containing epoxide groups, and (b) an oligomer of a fatty acid.

According to one preferred embodiment, the said crosslinking phase is carried out essentially without additional crosslinking agents.

According to another preferred aspect, the crosslinking phase is carried out by heating the crosslinkable elastomeric material to a temperature of at least 120°C, preferably of at least 160°C, for a period of at least 3 minutes, preferably of at least 10 minutes.

In accordance with a particularly preferred aspect, the said crosslinkable elastomeric material also comprises a reinforcing filler.

In a second aspect, the present invention relates to a tyre for vehicle wheels, comprising one or more components made of crosslinked elastomeric material, characterized in that at least one of the said components comprises, as crosslinked elastomeric material, an elastomeric polymer containing epoxide groups which is crosslinked by reaction with an oligomer of a fatty acid.

According to a further aspect, the present invention relates to a tyre for vehicles, comprising a belt structure which is extended coaxially around a carcass structure and a tread band which is extended coaxially around the belt structure and having, externally, a rolling surface which is intended to come into contact with the ground, characterized in that the said tread band comprises an elastomeric polymer containing epoxide groups which is crosslinked by reaction with an oligomer of a fatty acid.

According to a further aspect, the present invention relates to a tread band comprising a crosslinkable elastomeric composition comprising: (a) an elastomeric polymer containing epoxide groups, and (b) an oligomer of a fatty acid.

According to a further aspect, the present invention relates to a crosslinkable elastomeric composition comprising: (a) an elastomeric polymer containing epoxide groups, and (b) an oligomer of a fatty acid.

According to a further aspect, the present invention relates to a crosslinked elastomeric product obtained by crosslinking a crosslinkable composition as defined above.

For the purposes of the present description and the claims, the expression "in substantial absence of additional crosslinking agents" means that the crosslinkable composition is not subjected to the action of other systems capable of bringing about its crosslinking, or that other products which may be present in the composition can in themselves participate in the crosslinking reaction, but are used in amounts less than the minimum amount required to obtain an appreciable degree of crosslinking in a short time (for example within 5 minutes). In particular, the compositions according to the present invention are crosslinkable in substantial absence ofany of the crosslinking systems usually used in the art, such as, for example, sulphur or sulphur donors, peroxides or other radical initiators, and neither are these compositions subjected to the action of high-energy radiation (UV, gamma rays, etc.) so as to induce crosslinking phenomena in the polymer.

The fatty acid oligomers are present, at ambient temperature, in the form of oils or viscous liquids.

The expression "oligomers of a fatty acid" means mixtures of products of different molecular weights, in particular dimers and trimers thereof (or of different starting fatty acids). The presence of unreacted monomers mixed with the fatty acid dimers and trimers in the final product is not excluded. These monomers can optionally be removed from the final product, for example by distillation. However, it is thought that the presence of the starting fatty acid does not compromise the properties of the composition.

The fatty acid oligomers according to the present invention are obtained, according to the known art, by reacting an unsaturated fatty acid or a mixture of fatty acids including at least one unsaturated fatty acid, under heating, in the presence of a catalyst, for example clay, active earth, montmorillonite or a mixture of disactivated clay and water.

Alternatively, the fatty acid oligomers can be obtained, by means of reactions similar to those described above, by oligomerizing the corresponding esters, followed by hydrolysis. Further details of the reactions described above can be found in US patents 4 937 320, 4 776 983 and 5 880 298. It should be pointed out, however, that the presence of saturated fatty acids in the starting reaction mixture containing unsaturated fatty acids is not excluded. The fatty acids generally contain from 10 to 26 carbon atoms, preferably from 14 to 22 carbon atoms.

Examples of unsaturated fatty acids are: myristoleic acid, palmitoleic acid, oleic acid, gadoleic acid, erucic acid, ricinoleic acid, linoleic acid, linolenic acid and arachidonic acid, or mixtures thereof.

Examples of saturated fatty acids which may be present in the mixture are: lauric acid, myristic acid, palmitic acid, stearic acid and behenic acid, or mixtures thereof.

Particularly preferred starting materials from which to obtain the oligomers as described above are vegetableoils such as, for example: linseed oil, safflower oil, soybean oil, corn oil, cottonseed oil, rapeseed oil, castor oil, tung oil, tall oil, octyl tallate, sunflower oil and olive oil, or mixtures thereof.

The polymers containing epoxide groups which can be used in the compositions according to the present invention are homopolymers or copolymers with elastomeric properties, having a glass transition temperature (Tg) of less than 23°C, preferably less than 0°C, containing from 1 to 60 mol%, preferably from 2 to 40 mol%, of epoxide groups relative to the total number of moles of monomers present in the polymer. Mixtures of different polymers containing epoxide groups, or alternatively mixtures of one or more epoxidized polymers with one or more non-epoxidized elastomeric polymers, also fall within this definition.

In the case of copolymers, these can have a random, block, grafted or mixed structure. The average molecular weight of the base polymer is preferably between 2000 and 1,000,000, preferably between 50,000 and 500,000.

In particular, epoxidized diene homopolymers or copolymers, in which the base polymer structure, of synthetic or natural origin, is derived from one or more conjugated diene monomers, optionally copolymerized with monovinylarenes and/or polar comonomers, are preferred.

The polymers which are particularly preferred are those derived from the (co)polymerization of diene monomers containing from 4 to 12, preferably from 4 to 8, carbon atoms, selected, for example, from: 1,3-butadiene, isoprene, 2,3-dimethyl-1,3-butadiene, 3-butyl-1,3-octadiene and 2-phenyl-1,3-butadiene, or mixtures thereof. 1,3-Butadiene and isoprene are particularly preferred.

Monovinylarenes which can optionally be used as comonomers generally contain from 8 to 20, preferably from 8 to 12, carbon atoms and can be selected, for example, from: styrene; 1-vinylnaphthalene; 2-vinylnaphthalene; various alkyl, cycloalkyl, aryl, alkylaryl or arylalkyl derivatives of styrene, such as, for example: 3-methylstyrene, 4-propylstyrene, 4-cyclohexylstyrene, 4-dodecylstyrene, 2-ethyl-4-benzylstyrene, 4-p-tolylstyrene and 4-(4-phenylbutyl)styrene, or mixtures thereof. Styrene is particularly preferred. These monovinylarenes can optionally be substituted with one or more functional groups, such as alkoxy groups, for example 4-methoxystyrene and amino groups, for example 4-dimethylaminostyrene.

Various polar comonomers can be introduced into the base polymer structure, in particular vinylpyridine, vinylquinoline, acrylic and alkylacrylic acid esters, nitriles and the like, or mixtures thereof, such as, for example: methyl acrylate, ethyl acrylate, methyl methacrylate, ethyl methacrylate and acrylonitrile.

Among the diene polymers which are particularly preferred are: natural rubber, polybutadiene, polyisoprene, styrene/butadiene copolymers, butadiene/isoprene copolymers, styrene/isoprene copolymers and nitrile rubbers, or mixtures thereof.

In the case of copolymers, the amount of diene comonomer relative to the other comonomers is such as to ensure that the final polymer has elastomeric properties. In this sense, it is not possible generally to establish the minimum amount of diene comonomer required to obtain the desired elastomeric properties. As a guide, an amount of diene comonomer of at least 50% by weight relative to the total weight of the comonomers can generally be considered sufficient.

The base diene polymer can be prepared according to known techniques, generally in emulsion, in suspension or in solution. The base polymer thus obtained is then subjected to epoxidization according to known techniques, for example by reaction in solution with an epoxidizing agent. This agent is generally a peroxide or a peracid, for example m-chloroperbenzoic acid, peracetic acid and the like, or hydrogen peroxide in the presence of a carboxylic acid or a derivative thereof, for example acetic acid, acetic anhydride and the like, optionally mixed with an acid catalyst such as sulphuric acid. Further details regarding processes for epoxidizing elastomeric polymers are described, for example, in US patent 4 341 672 or by Schulz et al. in *Rubber Chemistry and Technology,* Vol. 55, p. 809 et seq.

Polymers containing epoxide groups which can also be used are elastomeric copolymers of one or more monoolefins with an olefinic comonomer containing one or more epoxide groups. The monoolefins can be selected from: ethylene and α-olefins generally containing from 3 to 12 carbon atoms, such as, for example: propylene, 1-butene, 1-pentene, 1-hexene, 1-octene and the like, or mixtures thereof. The following are preferred: copolymers between ethylene and an α-olefin, and optionally a diene; homopolymers of isobutene or copolymers thereof with minor amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene and the like. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; and the like, or mixtures thereof. Olefinic comonomers containing epoxide groups can be selected, for example, from: glycidyl acrylate, glycidyl methacrylate, vinylcyclohexene monoxide, allyl glycidyl ether and methallyl glycidyl ether. The introduction of the epoxide groups by the abovementioned epoxidized comonomers can be carried out by copolymerization of the corresponding monomers according to known techniques, in particular by radical copolymerization in emulsion. When a diene comonomer is present, this can be used to introduce epoxide groups by an epoxidation reaction as described above.

Examples of epoxidized elastomeric polymers which can be used in the present invention and which are currently commercially available are the products Epoxyprene^{®} from Guthrie (epoxidized natural rubber - ENR) and the products Poly BD^{®} from Elf Atochem (epoxidized polybutadiene).

In accordance with the present invention, the fatty acid oligomer is mixed with the epoxidized elastomeric polymer in variable proportions as a function of the amount of functional groups present and of the elastic properties which it is desired to give to the final product. The amounts of oligomer are generally between 3% and 50% by weight relative to the weight of the epoxidized polymer, preferably between 10% and 30% and even more preferably between 8% and 24%.

The crosslinkable compositions according to the present invention may contain reinforcing fillers, in an amount generally of between 30 phr and 120 phr (phr = parts by weight per 100 parts of polymer base). The reinforcing filler may be selected from those commonly used for crosslinked products, and in particular for tyres, such as: carbon black, silica, alumina, aluminosilicates, calcium carbonate, kaolin and the like, or mixtures thereof.

The crosslinkable compositions according to the present invention can comprise other commonly-used additives, selected on the basis of the specific application for which they are intended. For example, antioxidants, protective agents, plasticizers, compatibilizers for the reinforcing filler, adhesives, anti-ozonizing agents, modifying resins, fibres (for example Kevlar^{®} pulp), and the like, can be added to these compositions.

In particular, in order to further improve the processability, a plasticizer, generally selected from mineral oils, vegetable oils, synthetic oils and the like, or mixtures thereof, for example: aromatic oil, naphthenic oil, phthalates, soybean oil and the like, can be added to the crosslinkable compositions according to the present invention. The amount of lubricant can generally range between 2 and 100 phr, preferably between 5 and 50 phr.

For the purpose of increasing the rate of crosslinking, an effective amount of a coupling catalyst can also be added to the crosslinkable compositions according to the present invention. This amount can vary within a wide range, and is generally between 0.01 and 5 parts by weight, preferably between 0.1 and 3 parts by weight, relative to 100 parts by weight of epoxidized elastomeric polymer. The catalyst can be selected from those known in the art for coupling reactions, and in particular:
- carboxylates of metals such as tin, zinc, zirconium, iron, lead, cobalt, barium, calcium, manganese and the like, for example: dibutyltin dilaurate, dibutyltin diacetate, dioctyltin dilaurate, stannous acetate, stannous caprylate, lead naphthenate, zinc caprylate, zinc naphthenate, cobalt naphthenate, ferrous octanoate, iron 2-ethylhexanoate, and the like;
- arylsulphonic acids or derivatives thereof, for example: p-dodecylbenzenesulphonic acid, tetrapropylbenzenesulphonic acid, acetyl- p-dodecylbenzenesulphonate, 1-naphthalenesulphonic acid, 2-naphthalenesulphonic acid, acetylmethane sulphonate, acetyl p-toluenesulphonate, and the like;
- strong inorganic acids or bases, such as sodium hydroxide, potassium hydroxide, hydrochloric acid, sulphuric acid, and the like;
- amines and alkanolamines, for example ethylamine, dibutylamine, hexylamine, pyridine, dimethylethanolamine, and the like; or mixtures thereof.

The crosslinkable compositions according to the present invention can be prepared by mixing the polymer base with the reinforcing filler which may be optionally present and with the other additives, according to techniques known in the art. The mixing can be carried out, for example, using an open-mill mixer, or an internal mixer of the type with tangential rotors (Banbury) or interpenetrating rotors (Intermix), or in continuous mixers of the Ko-Kneader (Buss) or corotating or counter-rotating twin-screw type.

During the mixing, the temperature is kept below a predetermined value so as to avoid premature crosslinking of the composition. To this end, the temperature is generally kept below 170°C, preferably below 150°C, even more preferably below 120°C. As regards the mixing time, this can vary within a wide range, depending mainly on the specific composition of the mixture, on the possible presence of fillers and on the type of mixer used. In general, a mixing time of greater than 90 sec, preferably between 3 and 35 min, is sufficient to obtain a homogeneous composition..

In order to optimize the dispersion of the filler while keeping the temperature below the values indicated above, multi-stage mixing processes can also be employed, optionally using a combination of different mixers arranged in series.

As an alternative to the abovementioned mixing processes, in order to improve the dispersion of the components, the crosslinkable compositions according to the present invention can advantageously be prepared by mixing the fatty acid oligomer, and optionally the reinforcing filler and the other additives, with the epoxidized polymer base in the form of an aqueous emulsion or a solution in an organic solvent. The optional filler can be used as such or in the form of a suspension or dispersion in an aqueous medium. The polymer is subsequently separated from the solvent or from the water by suitable means. For example, when a polymer in emulsion is used, the polymer can be precipitated, in the form of particles including the oily phase and the optional filler, by adding a coagulant. A coagulant which can be used in particular is an electrolytic solution, for example an aqueous sodium or potassium silicate solution. The coagulation process can be promoted by using a volatile organic solvent which is then removed by evaporation during precipitation of the filled polymer. Further details regarding processes of this type for the preparation of elastomeric compounds are given, for example, in US patent 3 846 365.

The present invention will now be further illustrated by a number of implementation examples, with reference to:

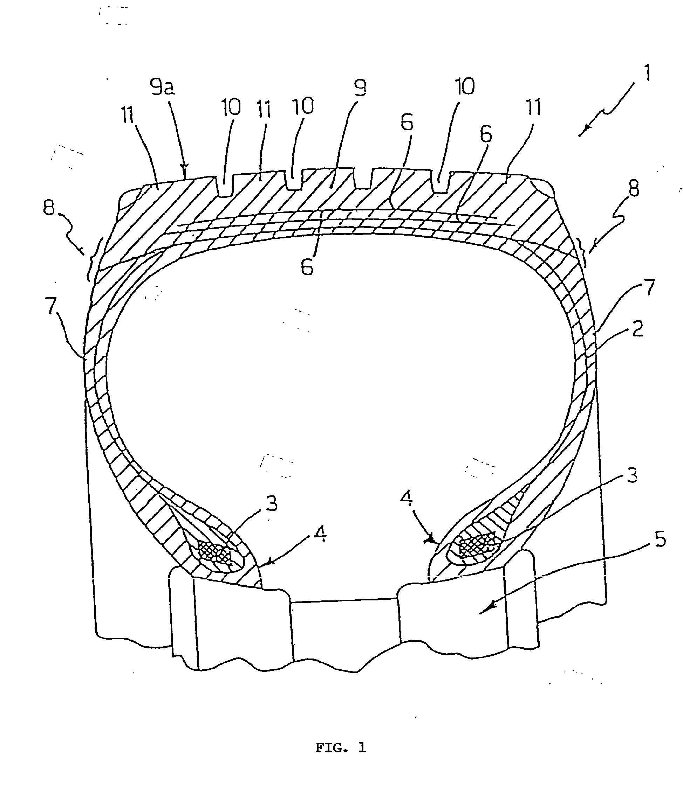

Figure 1, attached, which shows a view in cross section with partial cutaway of a tyre according to the present invention.

With reference to Fig. 1, a tyre 1 conventionally comprises at least one carcass ply 2 whose opposite side edges are coupled to respective anchoring bead wires 3, each enclosed in a bead 4 defined along an inner circumferential edge of the tyre, with which the tyre engages on a rim 5 forming part of the wheel of a vehicle.

The coupling between the carcass ply (2) and the bead wires (3) is usually carried out by folding the opposite lateral edges of the carcass ply (2) around the bead wires (3), so as to form the so-called carcass folds.

Alternatively, the conventional bead wires (3) can be replaced with a pair of circumferentially unextensible annular inserts formed from elongated components arranged in concentric spirals (not represented in Fig. 1) (see, for example, European patent applications EP-A-0 928 680 and EP-A-0 928 702). In this case, the carcass ply (2) is not folded around the said annular inserts, the coupling being provided by a second carcass ply (not represented in Fig. 1) applied externally onto the first.

Along the circumference of the carcass ply 2 are applied one or more belt strips 6, made using metal or textile cords enclosed in a rubber sheet.Outside the carcass ply 2, in respective opposite side portions of this ply, there is also applied a pair of side walls 7, each of which extends from the bead 4 to a so-called "shoulder" region 8 of the tyre, defined by the opposing ends of the belt strips 6. On the belt strips 6 is circumferentially applied a tread band 9 whose side edges end at the shoulders 8, joining it to the side walls 7. The tread band 9 has an external rolling surface 9a, intended to come into contact with the ground, in which circumferential grooves 10 intercalated with transverse cuttings (not shown in the attached figure) can be provided which define a plurality of blocks 11 variously distributed on the said rolling surface 9a.

The process for producing the tyre according to the present invention can be carried out according to techniques and using apparatus known in the art (see, for example, patents EP-199 064, US-4 872 822 and US-4 768 937). More particularly, this process comprises a step of manufacturing the green tyre, in which a series of semi-finished elements, prepared beforehand and separately from each other and corresponding to the various parts of the tyre (carcass plies, belt strips, bead wires, fillings, side walls and tread band) are combined together using a suitable manufacturing machine.

The green tyre thus obtained is then subjected to the subsequent steps of moulding and crosslinking. To this end, a vulcanization mould is used which is designed to receive the tyre being processed inside a moulding cavity having walls which are countermoulded to the outer surface of the tyre when the crosslinking is complete. Alternative processes for producing a tyre or tyre parts without using semi-finished elements are described, for example, in the abovementioned patent applications EP-A-0 928 680 and EP-A-0 928 702.

The green tyre can be moulded by introducing a pressurized fluid into the space defined by the inner surface of the tyre, so as to press the outer surface of the green tyre against the walls of the moulding cavity. In one of the moulding methods widely practised, it is provided that a vulcanization chamber made of elastomeric material, filled with steam and/or another pressurized fluid, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained (see, for example, patent EP-242 840). The difference in the coefficient of thermal expansion between the toroidal metal support and the crude elastomeric material is exploited to achieve an adequate moulding pressure.

At this point, the step of crosslinking of the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is brought to the crosslinking temperature using the same pressurized fluid used to press the tyre against the walls of the moulding cavity, heated to a maximum temperature of between 100 and 250°C. The time required to obtain a satisfactory degree of crosslinking throughout the mass of the elastomeric material can vary in general between 3 min and 90 min and depends mainly on the dimensions of the tyre.

The present invention will now be further illustrated, in a non-limiting manner, by a number of implementation examples.

### Examples 1 - 8

The compounds given in Table 1 were prepared using a tangential internal mixer, with a mixing time of about 30 min, taking care to keep the temperature as low as possible and, in any case, not above 120°C.

The Mooney ML(1+4) viscosity at 100°C was measured on the non-crosslinked compositions, according to ISO standard 289/1. The compositions were then subjected to MDR rheometric analysis using an MDR rheometer from Monsanto, the tests being carried out at 200°C for 30 min, with an oscillation frequency of 1.66 Hz (100 oscillations per minute) and an oscillation amplitude of ±0.5°. The minimum (ML) and maximum (MH) torque values are given in Table 2.

The mechanical properties (according to ISO standard 37) and the hardness in degrees IRHD (according to ISO standard 48) were measured on samples of the abovementioned compositions crosslinked at 200°C for 15 min. The results are given in Table 2.

**Table 1**

| | 1* | 2* | 3 | 4 | 5 | 6 | 7 | 8 |
|---|---|---|---|---|---|---|---|---|
| ENR 25 | 100 | 100 | 100 | 100 | 100 | 100 | 100 | 100 |
| SEBACIC ACID | 10 | 10 | | | | | | |
| FACIPOL® 120S | | | 6 | 12 | 24 | 6 | 12 | 24 |
| Carbon black N234 | 70 | | 60 | 60 | 60 | | | |
| Zeosil® 1165 MP | | 70 | | | | 60 | 60 | 60 |

| | | | | | | | | |
|---|---|---|---|---|---|---|---|---|
| (*) comparative Zeosil® 1165: precipitated silica with a BET surface area equal to about 165 m²/g (Rhône-Poulenc) ENR 25: epoxidized natural rubber containing 25 mol% of epoxide groups (Guthrie); Facipol® 120S: oligomer of a fatty acid containing 1% monomer, 79.5% dimer and 19.5% trimer, saponification number 198.7 mg KOH/g and acidity number 194 mg KOH/g) was supplied by FACI (Italy). | | | | | | | | |

**Table 2**

| | **1*** | **2*** | **3** | **4** | **5** | **6** | **7** | **8** |
|---|---|---|---|---|---|---|---|---|
| **MOONEY viscosity ML (1+4) 100°C** | (a) | (a) | 94.7 | 76.5 | 56.4 | (a) | (a) | (a) |
| **ML (dN.m)** | 4.26 | 3.66 | 3.19 | 2.57 | 1.54 | 9.2 | 7.6 | 4.5 |
| **MH (dN.m)** | 56 | 39.9 | 16.6 | 19.8 | 25.4 | 28 | 34 | 27 |
| **t90 (sec)** | 23.1 | 22.6 | 25.8 | 25 | 23.3 | 24.4 | 25.4 | 23.9 |
| **Stress at Break 100% CA1 (MPa)** | 6.1 | 8.46 | 1.81 | 1.88 | 2.39 | 2.27 | 2.05 | 2.23 |
| **Stress at Break 300% CA3 (MPa)** | (b) | (b) | 6.87 | 8.76 | 13 | 8.6 | 8.5 | 10.9 |
| **Stress at Break (MPa)** | 11.16 | 13.5 | 8.93 | 13 | 17.8 | 8.7 | 9.5 | 11.9 |
| **Elongation at break (%)** | 178 | 160 | 397 | 422 | 408 | 315 | 351 | 348 |
| **IRHD at 23°C (degrees)** | 86.7 | 86.1 | 67.5 | 65 | 65.8 | 69 | 71 | 62.8 |
| **IRHD at 100°C (degrees)** | 80 | 76.5 | 47.6 | 51.5 | 58 | 55 | 56.5 | 58.5 |
| **E' 0°C MPa** | (a) | (a) | 20.2 | 17.2 | 17.3 | 14.9 | 13.5 | 12.9 |
| **E' 70°C MPa** | 13.2 | 19.5 | 7 | 5.7 | 5.9 | 5.5 | 4.8 | 4.6 |
| **tan delta 0°C** | (a) | (a) | 0.565 | 0.614 | 0.656 | 0.582 | 0.647 | 0.720 |
| **tan delta 70°C** | 0.118 | 0.144 | 0.221 | 0.220 | 0.168 | 0.186 | 0.184 | 0.115 |

| | | | | | | | | |
|---|---|---|---|---|---|---|---|---|
| Comparative (a) value above the measurement limit of the instrument (b) the sample breaks before reaching 300% elongation. | | | | | | | | |

As can be seen from Table 2, the elongation values for the mixtures vulcanized with the oligomers are even more than twice that for the corresponding values of the reference mixtures (Comparative Examples 1 and 2).

Table 2 also gives the dynamic elastic modulus (E') values measured at 0°C and at 70°C using a dynamic Instron device in tension-compression according to the following methods.

A cylindrical sample of the crosslinked material (length = 25 mm; diameter = 14 mm), preloaded in compression up to a longitudinal deformation of 10% relative to the initial length, and maintained at the preset temperature (0°C or 70°C) throughout the test, was subjected to a dynamic sinusoidal deformation with an amplitude of ±3.33% relative to the length under preloading, with a frequency of 100 Hz.

The modulus values and hardnesses of the compounds according to the present invention are lower and more suitable for use in tyres, in particular for producing a tread band.

### Example 9 (comparative)

The comparative compound given in Table 3 was prepared using the same mixer as in the preceding examples.

The composition was crosslinked at 170°C for 10 minutes and subjected to the same measurements indicated above for Examples 1-8.

The results are given in Table 4, in which they are placed in comparison with those of Example 8.

**Table 3**

| | | EXAMPLE 9* |
|---|---|---|
| S-SBR | | 70 |
| | BR | 30 |
| | Zeosil®1165 MP | 63 |
| | X50S | 10 |
| | AROMATIC OIL | 5 |
| | ZnO | 3 |
| | STEARIC ACID | 2 |
| | CBS | 2 |
| | DPG | 1 |
| | ANTIOXIDANTS | 4 |
| | SULPHUR | 1.2 |

| | | |
|---|---|---|
| *** comparative** S-SBR: butadiene/styrene copolymer produced in solution, with a styrene content equal to 20% by weight and a content of vinyl groups equal to 60% by weight (product Buna VSL® 5025-1 HM from Bayer) BR: polybutadiene (product Europrene Neocis® from Enichem) X50S: silane coupling agent including 50% by weight of carbon black and 50% by weight of bis(3-triethoxysilylpropyl) tetrasulphide (Degussa) CBS: accelerator (N-cyclohexyl-benzothiazylsulphenamide Santocure® from Monsanto DPG: diphenylguanidine accelerator (Monsanto) Zeosil® 1165 MP: precipitated silica with a BET surface area equal to about 165 m²/g (Rhône-Poulenc) | | |

From the data given in Table 4, it is clear that the compositions according to the present invention make it possible to obtain a crosslinked product with properties similar to those which can be obtained by the sulphur-crosslinking of a conventional tread band mixture.Moreover the following can be noted for the crosslinked compositions according to the present invention:
- tan delta value at 0°C - which, as is known, is an index of wet grip - which is higher and the compositions therefore have better performance qualities, compared with the value obtained with a reference compound;
- an E' value at 70°C - which, as is known, is an index of the stability of the tread band when cornering under "dry handling" conditions - which is comparable (and thus a good response of the tyre to the stresses when cornering) with respect to the value which can be obtained with a reference compound;
- a tan delta value at 70°C - which, as is known, is an index of a lower rolling resistance - which is lower than the reference value and so indicates a lower rolling resistance.

It is also important to note that, for essentially equivalent performance qualities, the formulation of the compound was appreciably simplified compared with that of a traditional compound (from 11 to 5 ingredients: see Table 3), with evident advantages for an industrial production. In particular, in addition to not containing a vulcanizing system with sulphur, the compositions according to the invention, when filled with silica, do not require the presence of a coupling agent for silica and do not require a complex thermomechanical operating process, in order to obtain a good dispersion and compatibilization of the filler in the polymer matrix.

**Table 4**

| | EXAMPLE 9* | EXAMPLE 8 |
|---|---|---|
| MOONEY viscosity ML (1+4) at 100°C | 73 | (a) |
| Stress at Break (MPa) | 14.8 | 11.9 |
| Elongation at break (%) | 460.1 | 348 |
| IRHD at 23°C (degrees) | 73.1 | 62.8 |
| IRHD at 100°C (degrees) | 66.4 | 58.5 |
| E' 0°C (MPa) | 14.93 | 12.9 |
| Tan delta 0°C | 0.587 | 0.720 |
| E' 70°C (MPa) | 5.87 | 4.6 |
| Tan delta 70°C | 0.144 | 0.115 |

| | | |
|---|---|---|
| * comparative (a) value greater than the measuring limit of the instrument | | |

## Claims

1. Process for producing tyres for the wheels of vehicles, the said process comprising the following steps:
manufacturing a green tyre comprising at least one crosslinkable elastomeric material;
subjecting the green tyre to moulding in a mould cavity defined in a vulcanization mould;
crosslinking the elastomeric material by heating the tyre to a predetermined temperature and for a predetermined time;
**characterized in that** the crosslinkable elastomeric material comprises: (a) an elastomeric polymer containing epoxide groups, and (b) an oligomer of a fatty acid.

2. Process according to Claim 1, wherein the said crosslinking step is carried out substantially in the absence of additional crosslinking agents.

3. Process according to Claim 1 or 2, whereinthe crosslinking step is carried out by heating the crosslinkable elastomeric material to a temperature of at least 120°C for a period of at least 3 minutes.

4. Process according to any one of the preceding claims, whereinthe elastomeric material also comprises a reinforcing filler.

5. Process according to any one of the preceding claims, whereinthe said oligomer of a fatty acid comprises a dimer or a trimer, or a mixture thereof.

6. Process according to any one of the preceding claims whereinthe said fatty acid is selected from the group comprising myristoleic acid, palmitoleic acid, oleic acid, gadoleic acid, erucic acid, ricinoleic acid, linoleic acid, linolenic acid and arachidonic acid, or mixtures thereof.

7. Process according to any one of the preceding claims, whereinthe said fatty acid is a vegetable oil.

8. Process according to Claim 7, whereinthe said vegetable oil is selected from the group comprising linseed oil, safflower oil, soybean oil, corn oil, cottonseed oil, rapeseed oil, castor oil, tung oil, tall oil, octyl tallate, sunflower oil and olive oil, or mixtures thereof.

9. Process according to any one of the preceding claims, whereinthe elastomeric polymer containing epoxide groups is a homopolymer or copolymer with elastomeric properties, containing from 1 to 60 mol% of epoxide groups relative to the total number of moles of monomers present in the polymer.

10. Process according to Claim 9, whereinthe elastomeric polymer containing epoxide groups is a homopolymer or copolymer with elastomeric properties, containing from 2 to 40 mol% of epoxide groups relative to the total number of moles of monomers present in the polymer.

11. Process according to any one of the preceding claims, whereinthe elastomeric polymer containing epoxide groups has a glass transition temperature (Tg) of less than 23°C.

12. Process according to any one of the preceding claims, wherein the elastomeric polymer has an average molecular weight of between 2,000 and 1,000,000.

13. Process according to Claim 12, whereinthe elastomeric polymer has an average molecular weight of between 50,000 and 500,000.

14. Process according to any one of the preceding claims, whereinthe elastomeric polymer is an epoxidized diene homopolymer or copolymer derived from one or more conjugated diene monomers, optionally copolymerized with monovinylarenes and/or polar comonomers.

15. Process according to Claim 14, whereinthe elastomeric polymer is epoxidized natural rubber.

16. Process according to any one of Claims from 1 to 13, wherein the elastomeric polymer is a copolymer of one or more monoolefins with an olefinic comonomer containing one or more epoxide groups.

17. Process according to any one of the preceding claims, wherein the elastomeric polymer is in admixture with one or more non-epoxidized elastomeric polymers.

18. Process according to any one of the preceding claims, wherein the fatty acid oligomer is present in an amount of between 3% and 50% by weight relative to the weight of the epoxidized polymer.

19. Process according to Claim 18, wherein the fatty acid oligomer is present in an amount of between 10% and 30% by weight relative to the weight of the epoxidized polymer.

20. Process according to any one of the preceding claims, wherein the crosslinkable elastomeric material comprises an effective amount of a coupling catalyst.

21. Tyre for vehicle wheels, comprising one or more components made of crosslinked elastomeric material, **characterized in that** at least one of the said components comprises, as crosslinked elastomeric material, an elastomeric polymer containing epoxide groups which is crosslinked by reaction with an oligomer of a fatty acid.

22. Tyre according to Claim 21, wherein the said epoxidized elastomeric polymer is crosslinked substantially in the absence of additional crosslinking agents.

23. Tyre according to Claim 21 or 22, wherein the said crosslinked elastomeric material also comprises a reinforcing filler.

24. Tyre according to any one of Claims from 21 to 23, wherein the fatty acid oligomer is defined according to any one of Claims from 5 to 8.

25. Tyre according to any one of Claims from 21 to 24, wherein the elastomeric polymer containing epoxide groups is defined according to any one of Claims from 9 to 17.

26. Tyre for vehicles, comprising a belt structure which is extended coaxially around a carcass structure and a tread band which is extended coaxially around the belt structure and having, externally, a rolling surface which is intended to come into contact with the ground, **characterized in that** the said tread band comprises an elastomeric polymer containing -epoxide groups which is crosslinked by reaction with an oligomer of a fatty acid.

27. Tyre according to Claim 26, wherein the tread band also comprises a reinforcing filler.

28. Tyre according to Claim 26 or 27, wherein the said epoxidized elastomeric polymer is crosslinked substantially in the absence of additional crosslinking agents.

29. Tyre according to any one of Claims from 26 to 28, wherein the fatty acid oligomer is defined according to any one of Claims from 5 to 8.

30. Tyre according to any one of Claims from 26 to 29, wherein the elastomeric polymer containing epoxide groups is defined according to any one of Claims from 9 to 17.

31. Tread band comprising a crosslinkable elastomeric composition comprising: (a) an elastomeric polymer containing epoxide groups, and (b) an oligomer of a fatty acid.

32. Tread band according to Claim 31, wherein the said epoxidized elastomeric polymer is crosslinked substantially in the absence ofadditional crosslinking agents.

33. Crosslinkable elastomeric composition comprising: (a) an elastomeric polymer containing epoxide groups, and (b) an oligomer of a fatty acid, the said composition being crosslinkable substantially in the absence of additional crosslinking agents.

34. Crosslinkable elastomeric composition according to Claim 33, also comprising a reinforcing filler.

35. Composition according to Claim 33 or 34, wherein the said fatty acid oligomer comprises a dimer or a trimer, or a mixture thereof.

36. Composition according to any one of Claims from 33 to 35, wherein the said fatty acid is selected from the group comprising myristoleic acid, palmitoleic acid, oleic acid, gadoleic acid, erucic acid, ricinoleic acid, linoleic acid, linolenic acid and arachidonic acid, or mixtures thereof.

37. Composition according to any one of Claims from 33 to 36, wherein the said fatty acid is a vegetable oil.

38. Composition according to Claim 37, wherein the said vegetable oil is selected from the group comprising linseed oil, safflower oil, soybean oil, corn oil, cottonseed oil, rapeseed oil, castor oil, tung oil, tall oil, octyl tallate, sunflower oil and olive oil, or mixtures thereof.

39. Composition according to any one of Claims from 33 to 38, wherein the elastomeric polymer containing epoxide groups is a homopolymer or copolymer with elastomeric properties, containing from 1 to 60 mol% of epoxide groups relative to the total number of moles of monomers present in the polymer.

40. Composition according to Claim 39, wherein the elastomeric polymer containing epoxide groups is a homopolymer or copolymer with elastomeric properties, containing from 2 to 40 mol% of epoxide groups relative to the total number of moles of monomers present in the polymer.

41. Composition according to any one of Claims from 33 to 40, wherein the elastomeric polymer is an epoxidized diene homopolymer or copolymer derived from one or more conjugated diene monomers, optionally copolymerized with monovinylarenes and/or polar comonomers.

42. Composition according to Claim 41, wherein the elastomeric polymer is epoxidized natural rubber.

43. Composition according to any one of Claims from 33 to 40, wherein the elastomeric polymer is a copolymer of one or more monoolefins with an olefinic comonomer containing one or more epoxide groups.

44. Composition according to any one of Claims from 33 to 43, wherein the fatty acid oligomer is present in an amount of between 3% and 50% by weight relative to the weight of the epoxidized polymer.

45. Composition according to Claim 44, wherein the fatty acid oligomer is present in an amount of between 10% and 30% by weight relative to the weight of the epoxidized polymer.

46. Composition according to any one of Claims from 33 to 45, also comprising an effective amount of a coupling catalyst.

47. Crosslinked elastomeric product obtained by crosslinking a composition according to any one of Claims from 33 to 46.

## Patentansprüche

1. Verfahren zur Herstellung von Reifen für Fahrzeugräder, wobei das Verfahren die folgenden Schritte aufweist:
- Herstellen eines Rohreifens, der wenigstens ein vernetzbares elastomeres Material aufweist,
- Ausformen des Rohreifens in einem in einer Vulkanisierform ausgebildeten Formhohlraum und
- Vernetzen des elastomeren Materials durch Erhitzen des Reifens auf eine vorgegebene Temperatur und während einer vorgegebenen Zeit,
**dadurch gekennzeichnet,**
**dass** das vernetzbare elastomere Material
a) ein Epoxidgruppen enthaltendes elastomeres Polymer und
b) ein Oligomer einer Fettsäure aufweist.

2. Verfahren nach Anspruch 1, bei welchem der Vernetzungsschritt im Wesentlichen bei Abwesenheit von zusätzlichen Vernetzungsmitteln ausgeführt wird.

3. Verfahren nach Anspruch 1 oder 2, bei welchem der Vernetzungsschritt **dadurch** ausgeführt wird, dass das vernetzbare elastomere Material auf eine Temperatur von wenigstens 120°C während eines Zeitraums von wenigstens drei Minuten erhitzt wird.

4. Verfahren nach einem der vorhergehenden Ansprüche, bei welchem das elastomere Material auch einen verstärkenden Füllstoff aufweist.

5. Verfahren nach einem der vorhergehenden Ansprüche, bei welchem das Oligomer einer Fettsäure ein Dimer oder ein Trimer oder eine Mischung davon aufweist.

6. Verfahren nach einem der vorhergehenden Ansprüche, bei welchem die Fettsäure aus der Gruppe ausgewählt wird, die Myristoleinsäure, Palmitoleinsäure, Oleinsäure, Gadoleinsäure, Erucasäure, Ricinusölsäure, Linolsäure, Linolensäure, Arachidonsäure oder Mischungen davon aufweist.

7. Verfahren nach einem der vorhergehenden Ansprüche, bei welchem die Fettsäure ein Pflanzenöl ist.

8. Verfahren nach Anspruch 7, bei welchem das Pflanzenöl aus der Gruppe ausgewählt wird, die Leinsamenöl, Carthamusöl, Sojabohnenöl, Maisöl, Baumwollkernöl, Rapsöl, Rizinusöl, Tungöl, Tallöl, Octyltallat, Sonnenblumenöl, Olivenöl oder Mischungen davon aufweist.

9. Verfahren nach einem der vorhergehenden Ansprüche, bei welchem das Epoxidgruppen enthaltende elastomere Polymer ein Homopolymer oder ein Copolymer mit elastomeren Eigenschaften ist, das 1 bis 60 mol% Epoxidgruppen bezogen auf die Gesamtmolzahl von in dem Polymer vorhandenen Monomeren enthält.

10. Verfahren nach Anspruch 9, bei welchem das Epoxidgruppen enthaltende elastomere Polymer ein Homopolymer oder Copolymer mit elastomeren Eigenschaften ist, das 2 bis 40 mol% Epoxidgruppen bezogen auf die Gesamtmolzahl von in dem Polymer enthaltenen Monomeren enthält.

11. Verfahren nach einem der vorhergehenden Ansprüche, bei welchem das Epoxidgruppen enthaltende elastomere Polymer eine Glasübergangstemperatur (Tg) von weniger als 23°C hat.

12. Verfahren nach einem der vorhergehenden Ansprüche, bei welchem das elastomere Polymer ein mittleres Molekulargewicht zwischen 2.000 und 1.000.000 hat.

13. Verfahren nach Anspruch 12, bei welchem das elastomere Polymer ein mittleres Molekulargewicht zwischen 50.000 und 500.000 hat.

14. Verfahren nach einem der vorhergehenden Ansprüche, bei welchem das elastomere Polymer ein epoxidiertes Dienhomopolymer oder -copolymer ist, das von einem oder mehreren konjugierten Dienmonomeren abstammt, die wahlweise mit Monovinylarenen und/oder polaren Comonomeren copolymerisiert sind.

15. Verfahren nach Anspruch 14, bei welchem das elastomere Polymer ein epoxidierter Naturkautschuk ist.

16. Verfahren nach einem der Ansprüche 1 bis 13, bei welchem das elastomere Polymer ein Copolymer von einem oder mehreren Monoolefinen mit einem olefinischen Comonomer ist, das ein oder mehrere Epoxidgruppen enthält.

17. Verfahren nach einem der vorhergehenden Ansprüche, bei welchem das elastomere Polymer in einer Zumischung zu einem oder mehreren nicht-expoxidierten elastomeren Polymeren steht.

18. Verfahren nach einem der vorhergehenden Ansprüche, bei welchem das Fettsäureoligomer in einer Menge zwischen 3 und 50 Gew.-% bezogen auf das Gewicht des epoxidierten Polymers vorhanden ist.

19. Verfahren nach Anspruch 18, bei welchem das Fettsäureoligomer in einer Menge zwischen 10 und 30 Gew.-% bezogen auf das Gewicht des epoxidierten Polymers vorhanden ist.

20. Verfahren nach einem der vorhergehenden Ansprüche, bei welchem das vernetzbare elastomere Material eine effektive Menge eines Kopplungskatalysators aufweist.

21. Reifen für Fahrzeugräder mit einer oder mehreren Komponenten aus vernetztem elastomerem Material, **dadurch gekennzeichnet, dass** wenigstens eine der Komponenten als vernetztes elastomeres Material ein Epoxidgruppen enthaltendes elastomeres Polymer aufweist, das durch Reaktion mit einem Oligomer einer Fettsäure vernetzt ist.

22. Reifen nach Anspruch 21, bei welchem das epoxidierte elastomere Polymer im Wesentlichen bei Abwesenheit von zusätzlichen Vernetzungsmitteln vernetzt ist.

23. Reifen nach Anspruch 21 oder 22, bei welchem das vernetzte elastomere Material auch einen verstärkenden Füllstoff aufweist.

24. Reifen nach einem der Ansprüche 21 bis 23, bei welchem das Fettsäureoligomer nach einem der Ansprüche 5 bis 8 definiert ist.

25. Reifen nach einem der Ansprüche 21 bis 24, bei welchem das Epoxidgruppen enthaltende elastomere Polymer gemäß einem der Ansprüche 9 bis 17 definiert ist.

26. Reifen für Fahrzeuge mit einem Gurtaufbau, der sich koaxial um einen Karkassenaufbau herum erstreckt, und mit einem Laufflächenband, das sich koaxial um den Gurtaufbau herum erstreckt und außen eine Rollfläche hat, die mit dem Boden in Kontakt kommen soll, **dadurch gekennzeichnet, dass** das Laufflächenband ein Epoxidgruppen enthaltendes elastisches Polymer aufweist, das durch Reaktion mit einem Oligomer einer Fettsäure vernetzt ist.

27. Reifen nach Anspruch 26, bei welchem das Laufflächenband auch einen verstärkenden Füllstoff aufweist.

28. Reifen nach Anspruch 26 oder 27, bei welchem das epoxidierte elastomere Polymer im Wesentlichen bei Abwesenheit von zusätzlichen Vernetzungsmitteln vernetzt ist.

29. Reifen nach einem der Ansprüche 26 bis 28, bei welchem das Fettsäureoligomer nach einem der Ansprüche 5 bis 8 definiert ist.

30. Reifen nach einem der Ansprüche 26 bis 29, bei welchem das Epoxidgruppen enthaltende elastomere Polymer gemäß einem der Ansprüche 9 bis 17 definiert ist.

31. Laufflächenband mit einer vernetzbaren elastomeren Zusammensetzung, die a) ein Epoxidgruppen enthaltendes elastomeres Polymer und b) ein Oligomer einer Fettsäure aufweist.

32. Laufflächenband nach Anspruch 31, bei welchem das epoxidierte elastomere Polymer im Wesentlichen bei Abwesenheit von zusätzlichen Vernetzungsmitteln vernetzt ist.

33. Vernetzbare elastomere Zusammensetzung mit
a) einem Epoxidgruppen enthaltenden elastomeren Polymer und
b) einem Oligomer einer Fettsäure,
- wobei die Zusammensetzung im Wesentlichen bei Abwesenheit von zusätzlichen Vernetzungsmitteln vernetzbar ist.

34. Vernetzbare elastomere Zusammensetzung nach Anspruch 33, welche auch einen verstärkenden Füllstoff aufweist.

35. Zusammensetzung nach Anspruch 33 oder 34, bei welcher das Fettsäureoligomer ein Dimer oder ein Trimer oder Mischungen davon aufweist.

36. Zusammensetzung nach einem der Ansprüche 33 bis 35, bei welcher die Fettsäure aus der Gruppe ausgewählt wird, die Myristoleinsäure, Palmitoleinsäure, Oleinsäure, Gadoleinsäure, Erucasäure, Ricinusölsäure, Linolsäure, Linolensäure, Arachidonsäure oder Mischungen davon aufweist.

37. Zusammensetzung nach einem der Ansprüche 33 bis 36, bei welcher die Fettsäure ein Pflanzenöl ist.

38. Zusammensetzung nach Anspruch 37, bei welcher das Pflanzenöl aus der Gruppe ausgewählt wird, die Leinsamenöl, Carthamusöl, Sojabohnenöl, Maisöl, Baumwollkernöl, Rapsöl, Rizinusöl, Tungöl, Tallöl, Octyltallat, Sonnenblumenöl, Olivenöl oder Mischungen davon aufweist.

39. Zusammensetzung nach einem der Ansprüche 33 bis 38, bei welcher das Epoxidgruppen enthaltende elastomere Polymer ein Homopolymer oder ein Copolymer mit elastomeren Eigenschaften ist, das 1 bis 60 mol% Epoxidgruppen bezogen auf die Gesamtmolzahl von in dem Polymer vorhandenen Monomeren enthält.

40. Zusammensetzung nach Anspruch 39, bei welcher das Epoxidgruppen enthaltende elastomere Polymer ein Homopolymer oder Copolymer mit elastomeren Eigenschaften ist, das 2 bis 40 mol% Epoxidgruppen bezogen auf die Gesamtmolzahl von in dem Polymer vorhandenen Monomeren enthält.

41. Zusammensetzung nach einem der Ansprüche 33 bis 40, bei welcher das elastomere Polymer ein epoxidiertes Dienhomopolymer oder -copolymer ist, das von einem oder mehreren konjugierten Dienmonomeren abstammt, die wahlweise mit Monovinylarenen und/oder polaren Comonomeren copolymerisiert sind.

42. Zusammensetzung nach Anspruch 41, bei welcher das elastomere Polymer ein epoxidierter Naturkautschuk ist.

43. Zusammensetzung nach einem der Ansprüche 33 bis 40, bei welcher das elastomere Polymer ein Copolymer von einem oder mehreren Monoolefinen mit einem olefinischen Comonomer ist, das ein oder mehrere Epoxidgruppen enthält.

44. Zusammensetzung nach einem der Ansprüche 33 bis 43, bei welcher das Fettsäureoligomer in einer Menge zwischen 3 und 50 Gew.-% bezogen auf das Gewicht des epoxidierten Polymers vorhanden ist.

45. Zusammensetzung nach Anspruch 44, bei welcher das Fettsäureoligomer in einer Menge zwischen 10 und 30 Gew.-% bezogen auf das Gewicht des epoxidierten Polymers vorhanden ist.

46. Zusammensetzung nach einem der Ansprüche 33 bis 45, welche auch eine effektive Menge eines Kopplungskatalysators aufweist.

47. Vernetztes elastomeres Produkt erhalten durch Vernetzen einer Zusammensetzung nach einem der Ansprüche 33 bis 46.

## Revendications

1. Procédé de production de pneus pour roues de véhicules, lequel procédé comporte les étapes suivantes :
- fabriquer un pneu cru comprenant au moins un matériau élastomère réticulable,
- soumettre le pneu cru à un moulage dans une cavité de moule définie dans un moule de vulcanisation,
- et faire réticuler le matériau élastomère en chauffant le pneu à une température prédéterminée et pendant un laps de temps prédéterminé,
et est **caractérisé en ce que** le matériau élastomère réticulable comprend :
a) un polymère élastomère comportant des groupes époxyde,
b) et un oligomère d'acide gras.

2. Procédé conforme à la revendication 1, dans lequel on effectue ladite étape de réticulation sans pratiquement aucun agent supplémentaire de réticulation.

3. Procédé conforme à la revendication 1 ou 2, dans lequel on effectue ladite étape de réticulation en chauffant le matériau élastomère réticulable à une température d'au moins 120 °C pendant un laps de temps d'au moins 3 minutes.

4. Procédé conforme à l'une des revendications précédentes, dans lequel le matériau élastomère comprend aussi une charge renforçante.

5. Procédé conforme à l'une des revendications précédentes, dans lequel ledit oligomère d'acide gras comprend un dimère ou un trimère, ou un mélange de tels composés.

6. Procédé conforme à l'une des revendications précédentes, dans lequel ledit acide gras est choisi parmi les acides myristoléique, palmitoléique, oléique, gadoléique, érucique, ricinoléique, linoléique, linolénique et arachidonique, et les mélanges de ces acides.

7. Procédé conforme à l'une des revendications précédentes, dans lequel ledit acide gras est une huile végétale.

8. Procédé conforme à la revendication 7, dans lequel ladite huile végétale est choisie parmi l'huile de lin, l'huile de carthame, l'huile de soja, l'huile de maïs, l'huile de coton, l'huile de navette, l'huile de ricin, l'huile d'abrasin, l'huile de pin, le tallate d'octyle, l'huile de tournesol, l'huile d'olive, et les mélanges de ces huiles.

9. Procédé conforme à l'une des revendications précédentes, dans lequel le polymère élastomère comportant des groupes époxyde est un homopolymère ou copolymère doté de propriétés d'élastomère et comportant 1 à 60 % en moles de groupes époxyde, par rapport au nombre total de moles des monomères présents dans ce polymère.

10. Procédé conforme à la revendication 9, dans lequel le polymère élastomère comportant des groupes époxyde est un homopolymère ou copolymère doté de propriétés d'élastomère et comportant 2 à 40 % en moles de groupes époxyde, par rapport au nombre total de moles des monomères présents dans ce polymère.

11. Procédé conforme à l'une des revendications précédentes, dans lequel le polymère élastomère comportant des groupes époxyde présente une température de transition vitreuse Tg inférieure à 23 °C.

12. Procédé conforme à l'une des revendications précédentes, dans lequel le polymère élastomère présente une masse molaire moyenne de 2000 à 1 000 000.

13. Procédé conforme à la revendication 12, dans lequel le polymère élastomère présente une masse molaire moyenne de 50 000 à 500 000.

14. Procédé conforme à l'une des revendications précédentes, dans lequel le polymère élastomère est un homopolymère ou copolymère de diène époxydé, dérivé d'un ou plusieurs monomères diènes conjugués, copolymérisés, en option, avec des monovinyl-arènes et/ou des comonomères polaires.

15. Procédé conforme à la revendication 14, dans lequel le polymère élastomère est un caoutchouc naturel époxydé.

16. Procédé conforme à l'une des revendications 1 à 13, dans lequel le polymère élastomère est un copolymère d'une ou plusieurs monooléfines et d'un comonomère oléfinique comportant un ou plusieurs groupes époxyde.

17. Procédé conforme à l'une des revendications précédentes, dans lequel le polymère élastomère se trouve mélangé avec un ou plusieurs polymères élastomères non-époxydés.

18. Procédé conforme à l'une des revendications précédentes, dans lequel l'oligomère d'acide gras se trouve présent en une quantité représentant 3 à 50 % du poids du polymère époxydé.

19. Procédé conforme à la revendication 18, dans lequel l'oligomère d'acide gras se trouve présent en une quantité représentant 10 à 30 % du poids du polymère époxydé.

20. Procédé conforme à l'une des revendications précédentes, dans lequel le matériau élastomère réticulable comprend un catalyseur de couplage, présent en une quantité efficace.

21. Pneu pour roue de véhicule, comprenant un ou plusieurs composants faits d'un matériau élastomère réticulé, **caractérisé en ce qu'**au moins l'un de ces composants comprend, en tant que matériau élastomère réticulé, un polymère élastomère comportant des groupes époxyde, réticulé par réaction avec un oligomère d'acide gras.

22. Pneu conforme à la revendication 21, dans lequel ledit polymère élastomère époxydé est réticulé sans pratiquement aucun agent supplémentaire de réticulation.

23. Pneu conforme à la revendication 21 ou 22, dans lequel ledit matériau élastomère réticulé comprend aussi une charge renforçante.

24. Pneu conforme à l'une des revendications 21 à 23, dans lequel l'oligomère d'acide gras répond à la définition donnée dans l'une des revendications 5 à 8.

25. Pneu conforme à l'une des revendications 21 à 24, dans lequel le polymère élastomère comportant des groupes époxyde répond à la définition donnée dans l'une des revendications 9 à 17.

26. Pneu pour véhicules, comprenant une structure de ceinture, disposée coaxialement autour d'une structure de carcasse, et une bande de roulement, disposée coaxialement autour de la structure de ceinture et dotée, vers l'extérieur, d'une surface de roulement destinée à entrer en contact avec le terrain, **caractérisé en ce que** ladite bande de roulement comprend un polymère élastomère comportant des groupes époxyde, réticulé par réaction avec un oligomère d'acide gras.

27. Pneu conforme à la revendication 26, dans lequel la bande de roulement comprend aussi une charge renforçante.

28. Pneu conforme à la revendication 26 ou 27, dans lequel ledit polymère élastomère époxydé est réticulé sans pratiquement aucun agent supplémentaire de réticulation.

29. Pneu conforme à l'une des revendications 26 à 28, dans lequel l'oligomère d'acide gras répond à la définition donnée dans l'une des revendications 5 à 8.

30. Pneu conforme à l'une des revendications 26 à 29, dans lequel le polymère élastomère comportant des groupes époxyde répond à la définition donnée dans l'une des revendications 9 à 17.

31. Bande de roulement, comprenant une composition élastomère réticulable qui comporte :
a) un polymère élastomère comportant des groupes époxyde,
b) et un oligomère d'acide gras.

32. Bande de roulement conforme à la revendication 31, dans laquelle ledit polymère élastomère époxydé est réticulé sans pratiquement aucun agent supplémentaire de réticulation.

33. Composition élastomère réticulable comportant :
a) un polymère élastomère comportant des groupes époxyde,
b) et un oligomère d'acide gras,
laquelle composition est réticulable sans pratiquement aucun agent supplémentaire de réticulation.

34. Composition élastomère réticulable conforme à la revendica-tion 33, qui comporte aussi une charge renforçante.

35. Composition conforme à la revendication 33 ou 34, dans laquelle ledit oligomère d'acide gras comprend un dimère ou un trimère, ou un mélange de tels composés.

36. Composition conforme à l'une des revendications 33 à 35, dans laquelle ledit acide gras est choisi parmi les acides myristoléique, palmitoléique, oléique, gadoléique, érucique, ricinoléique, linoléique, linolénique et arachidonique, et les mélanges de ces acides.

37. Composition conforme à l'une des revendications 33 à 36, dans laquelle ledit acide gras est une huile végétale.

38. Composition conforme à la revendication 37, dans laquelle ladite huile végétale est choisie parmi l'huile de lin, l'huile de carthame, l'huile de soja, l'huile de maïs, l'huile de coton, l'huile de navette, l'huile de ricin, l'huile d'abrasin, l'huile de pin, le tallate d'octyle, l'huile de tournesol, l'huile d'olive, et les mélanges de ces huiles.

39. Composition conforme à l'une des revendications 33 à 38, dans laquelle le polymère élastomère comportant des groupes époxyde est un homopolymère ou copolymère doté de propriétés d'élastomère et comportant 1 à 60 % en moles de groupes époxyde, par rapport au nombre total de moles des monomères présents dans ce polymère.

40. Composition conforme à la revendication 39, dans laquelle le polymère élastomère comportant des groupes époxyde est un homopolymère ou copolymère doté de propriétés d'élastomère et comportant 2 à 40 % en moles de groupes époxyde, par rapport au nombre total de moles des monomères présents dans ce polymère.

41. Composition conforme à l'une des revendications 33 à 40, dans laquelle le polymère élastomère est un homopolymère ou copolymère de diène époxydé, dérivé d'un ou plusieurs monomères diènes conjugués, co-polymérisés, en option, avec des monovinyl-arènes et/ou des comonomères polaires.

42. Composition conforme à la revendication 41, dans laquelle le polymère élastomère est un caoutchouc naturel époxydé.

43. Composition conforme à l'une des revendications 33 à 40, dans laquelle le polymère élastomère est un copolymère d'une ou plusieurs monooléfines et d'un comonomère oléfinique comportant un ou plusieurs groupes époxyde.

44. Composition conforme à l'une des revendications 33 à 43, dans laquelle l'oligomère d'acide gras se trouve présent en une quantité représentant 3 à 50 % du poids du polymère époxydé.

45. Composition conforme à la revendication 44, dans laquelle l'oligomère d'acide gras se trouve présent en une quantité représentant 10 à 30 % du poids du polymère époxydé.

46. Composition conforme à l'une des revendications 33 à 45, qui comprend aussi un catalyseur de couplage, présent en une quantité efficace.

47. Produit élastomère réticulé, obtenu par réticulation d'une composition conforme à l'une des revendications 33 à 46.
